# FASCICULE DE BREVET EUROPEEN

(11) **EP 0 752 151 B1**
(45) Date de publication et mention de la délivrance du brevet: **21.10.1998**
(21) Numéro de dépôt: 94910449.1
(22) Date de dépôt: 22.03.1994
(51) Int. Cl.: G21F 5/012, G21C 19/07

(54) **PANIER DE RANGEMENT POUR ASSEMBLAGES COMBUSTIBLES NUCLEAIRES, COMPRENANT ESSENTIELLEMENT UN SIMPLE FAISCEAU DE TUBES CONTIGUS**
IM WESENTLICHEN EIN BÜNDEL ANEINANDERLIEGENDER ROHRE ENTHALTENDER SPEICHERRAHMEN FÜR KERNBRENNSTABBÜNDEL
STORAGE RACK FOR NUCLEAR FUEL ASSEMBLIES, ESSENTIALLY INCLUDING A SINGLE CONTIGUOUS TUBE BUNDLE

(43) Date de publication de la demande: 08.01.1997
(73) Titulaire: TRANSNUCLEAIRE S.A., 75008 Paris (FR)
(72) Inventeur: KIRCHNER, Bernard, F-91190 Gif-sur-Yvette (FR); MALESYS, Pierre, F-94470 Boissy-Saint-Léger (FR)
(74) Mandataire: Mougeot, Jean-Claude
(86) Numéro de dépôt international: FR9400312
(87) Numéro de publication internationale: WO9526030

(56) Documents cités:
- EP-A- 0 128 785
- EP-A- 0 329 581
- NL-A- 8 400 864
- US-A- 4 203 038

## Description

### DOMAINE TECHNIQUE

L'invention concerne un panier de rangement pour assemblages combustibles nucléaires constitué d'une pluralité d'alvéoles contigus de grande longueur dans chacun desquels peut être introduit un assemblage combustible ou éventuellement les crayons de plusieurs assemblages combustibles après consolidation.

Ces paniers de rangement (que l'on appelle également casiers ou racks) sont destinés au stockage et/ou au transport desdits assemblages combustibles, éventuellement en emballages blindés ou non; ils sont particulièrement adaptés pour le combustible irradié, mais sont parfaitement utilisables pour du combustible neuf; ils peuvent être utilisés en milieu sec ou humide, par exemple lors du stockage des combustibles en piscine ou lors de leur introduction dans des emballages de transport ou stockage, ou bien lors de leur stockage intérimaire dans des structures en béton, ou bien encore lors de leur stockage final par enfouissement dans les couches géologiques.

### ETAT DE LA TECHNIQUE

On connait de nombreux types de paniers à structure alvéolaire pour assemblages combustibles nucléaires. Ils doivent remplir simultanément trois fonctions principales :
- contrôle de la criticité, à sec ou en présence d'eau à l'état liquide ou gazeux (cette eau pouvant contenir des composés neutrophages, à base de bore par exemple), de l'ensemble des assemblages qui y sont rangés;
- transfert thermique, pour évacuer la chaleur dégagée dans le cas des assemblages irradiés ;
- résistance mécanique suffisante qui répond à deux objectifs : (i) assurer le maintien de la géométrie du panier chargé d'assemblages et éviter la détérioration des crayons combustibles lors des utilisations normales (manutention, transport...), (ii) assurer le contrôle de la criticité par maintien de la géométrie du panier même en conditions accidentelles (choc et chute importants) selon les réglementations en vigueur.

Les paniers sont parfois conçus également en vue d'apporter un complément de blindage contre les radiations, utile dans certaines applications.

Divers modèles de paniers ont été développés pour être adaptés aux assemblages utilisés dans les différents types de réacteurs : à eau légère (PWR, BWR, VVER...), ou graphite (UNGG, MAGNOX, AGR, RBMK, ...), à eau lourde (CANDU ...), à neutrons rapides, réacteurs de recherche...

Pour réaliser les parois des alvéoles des paniers ainsi développés, on emploie généralement une association de plusieurs matériaux, chacun d'eux remplissant au moins une des trois fonctions citées ci-dessus.

Les principaux matériaux utilisés sont en général, l'acier inox ou l'aluminium (ou ses alliages) pour la fonction résistance mécanique, l'aluminium ou le cuivre (ou leurs alliages) pour la fonction transfert thermique, les composés au bore (comme les frittés à base de B4C), les alliages de cuivre, d'aluminium ou d'acier inox contenant du bore pour la fonction contrôle de la criticité, cette dernière pouvant être également remplie par des espaces d'épaisseur suffisante ménagés dans les cloisons des alvéoles du panier, espaces se remplissant d'eau ou se vidant en même temps que les alvéoles contenant le milieu combustible.

Ainsi les alvéoles sont souvent constitués à l'aide :
- de cloisons composites de type sandwich comportant des couches successives de ces dits matériaux, plaquées les unes sur les autres, chacune des couches remplissant au moins une des fonctions
- ou bien de cloisons constituées d'une juxtaposition dans le sens longitudinal de composants de base (généralement des profilés) fabriqués en ces dits matériaux; dans une cloison entre alvéoles on peut noter ainsi une succession, dans ledit sens longitudinal, de composants de base en matériaux différents remplissant chacun au moins une des fonctions. Une telle disposition est illustrée dans la demande de brevet européen EP-A-0 329 581 correspondant au brevet FR-A-2 627 622 et à son certificat d'addition FR-E-2 650 113.

Dans ces brevets, les composants de base juxtaposés constituant les cloisons entre alvéoles sont des profilés en matériau standard régulièrement juxtaposés et entrecroisés perpendiculairement à l'axe desdits alvéoles et maintenus solidaires les uns des autres ; ces profilés peuvent être en acier inox, alliage d'aluminium, cuivre etc... pour remplir les fonctions résistance mécanique et transfert thermique, la fonction contrôle de criticité pouvant être remplie par des tiges en matières neutrophage insérées dans lesdites cloisons et/ou par des profilés de forme identique en matière neutrophage insérés dans l'empilement.

Par exemple dans la fig. 6 du brevet FR-A-2627622, les cloisons entre alvéoles sont constituées d'une juxtaposition de bandes munies d'encoches coopérant les unes avec les autres de façon à entrecroiser lesdites bandes et à les maintenir solidaires les unes avec les autres pour obtenir des alvéoles à l'image des séparateurs de cartons à bouteille. Cette juxtaposition comporte une alternance de bandes en matière neutrophage (pour la fonction criticité) et de bandes en matériau standard (pour les fonctions résistance mécanique et transfert thermique). Un tel panier est conçu pour ne pas être déformable en conditions accidentelles sévères, telles que celles prévues dans la réglementation de l'AIEA (Agence Internationale pour l'Energie Atomique) pour le transport des matières radioactives.

Or, plutôt que d'utiliser une association de matériaux différents pour former les cloisons entre alvéoles, la demanderesse a déjà réalisé un panier constitué de bandes entrecroisées comme dans ladite fig. 6, mais avec des bandes toutes identiques qui sont constituées d'un seul type de matériau multifonction contenant donc un élément neutrophage.

Une telle solution permet de concevoir un panier ayant une résistance mécanique limitée à celle nécessaire à la manutention et au transport d'assemblages combustibles en conditions normales; il ne nécessite pas en particulier une résistance mécanique aux chocs et chutes accidentelles sévères prévus par la réglementation; en effet un tel panier dont les cloisons situées au droit de la partie active sont réalisées exclusivement en matériau neutrophage garantit la sous-criticité même en cas de déformation importante. L'homologation d'un tel panier ne requiert plus de tester sa résistance mécanique en cas de chocs ou de chutes sévères, ce qui est un avantage.

Ce panier, généralement en aluminium au bore, qui relève d'une conception lui permettant d'assurer les fonctions de contrôle de criticité, transfert thermique et résistance mécanique en conditions normales de manutention ou de transport, ne requiert pas la fonction résistance mécanique en condition d'accident sévère, ce qui autorise de limiter l'épaisseur des cloisons entre alvéoles et de gagner ainsi de la capacité pour les assemblages combustibles.

Mais une telle juxtaposition de bandes nécessite l'usinage des encoches qui coopèrent mutuellement lors de l'assemblage du panier et lui donne sa rigidité; ceci présente plusieurs inconvénients:
- l'usinage doit être très précis avec un faible jeu de montage, de façon que les bandes soient parfaitement alignées et que les parois des alvéoles soient parfaitement lisses pour qu'il n'y ait pas d'accrochage lors du chargement des assemblages combustibles; cet usinage de précision est délicat et a un coût non négligeable,
- à cause du faible jeu de montage, l'assemblage des bandes au niveau de leurs encoches peut présenter une certaine difficulté,
- enfin, la présence d'encoches doit être compensée par une surépaisseur des bandes pour assurer les fonctions prévues (résistance mécanique et transfert thermique) au niveau requis.

Compte tenu de ces inconvénients, la demanderesse a cherché à simplifier encore la construction des paniers en évitant en particulier l'usinage d'encoches et l'assemblage délicat des bandes, tout en conservant ou améliorant la capacité de stockage d'assemblages combustibles.

### DESCRIPTION DE L'INVENTION

L'invention est un panier de rangement pour assemblages combustibles nucléaires conforme à l'object de la revendication 1.

Ainsi le panier présente l'aspect d'un fagot de tubes identiques frettés, chaque tube étant prévu pour recevoir un assemblage combustible.

Les tubes sont prismatiques ou cylindriques avec une section droite correspondant en général à celle de l'assemblage devant y être introduit. Cette section peut être triangulaire équilatérale, carrée, rectangulaire, hexagonale, ce qui permet un contact des tubes, face contre face, utile pour le transfert thermique.

Mais il est aussi possible d'utiliser des tubes à section circulaire, le contact se faisant alors selon des génératrices, ce qui est parfois suffisant, notamment en milieu humide où le transfert thermique peut se faire efficacement par convection dans des fluides remplissant le panier.

La longueur des tubes correspond en général à celle des assemblages à ranger, ou au moins à la longueur de leur partie active.

Il est important de noter que dans les paniers de l'art antérieur on recherche généralement la continuité du matériau constitutif du panier dans le sens radial de façon à favoriser le transfert thermique du centre du panier vers sa périphérie, et que de façon inattendue dans le panier de l'invention il n'y a pas de continuité radiale, mais seulement longitudinale, et que malgré cela on peut obtenir un excellent transfert thermique radial grâce au frettage résultant des simples cerclages enserrant les tubes juxtaposés en contact les uns avec les autres, face contre face.

Les tubes sont avantageusement obtenus selon les techniques usuelles d'extrusion, ce qui est un élément décisif pour simplifier la fabrication du panier et en abaisser le coût, sans nuire à ses autres caractéristiques. Mais ils peuvent également être obtenus par tout autre procédé connu de l'homme de l'art, par exemple par pliage et/ou soudage, formage, etc...

Habituellement homogènes, les tubes sont réalisés en un matériau unique, en général un métal ou alliage métallique contenant un élément ou composé neutrophage avec des caractéristiques mécaniques suffisantes pour résister à la charge des assemblages combustibles dans les conditions normales de manutention et de transport, et/ou éventuellement une bonne conductivité thermique pour les applications qui nécessitent un transfert thermique radial efficace.

Suivant les applications, le métal ou alliage peut être choisi parmi les aciers (ordinaire, inox ou spéciaux), le Magnésium, le Cuivre, le Titane ou leurs alliages, l'aluminium ou ses alliages, etc. D'autre part, le composé neutrophage peut être à base de Cd, Gd, Hf, In, Li, B, etc. Mais l'utilisation de l'acier inox au bore est particulièrement indiquée lorsqu'un long séjour en milieu humide est prévu, tandis que pour un stockage à sec de longue durée on choisira de préférence un aluminium ou alliage d'aluminium au bore, à cause de sa conductivité thermique bien plus élevée que celle des aciers.

Il est important de noter que le fait que le panier n'ait plus à assurer qu'une résistance mécanique limitée au maintien de la masse d'assemblages combustibles dans les conditions normales de manutention ou de transport entraîne que l'on peut se dispenser d'utiliser par exemple un Aluminium fortement allié qui a de ce fait des performances thermiques mcins bonnes. On peut au contraire utiliser une matrice d'Aluminium pur, qui a une meilleure conductivité thermique. A titre indicatif la conductivité thermique des alliages du type AS13 utilisés par exemple pour les pièces coulées est d'environ 160 W/m.°C, et celle des alliages Al-Mg destinés par exemple aux profilés à haute résistance mécanique de l'ordre de 120 W/m.°C, alors que pour de l'Al du type A5 (pureté meilleure que 99,5 %) elle est de l'ordre de 230 W/m.°C.

Pour assurer la sous-criticité du panier rempli d'assemblages, les tubes contiennent donc une matière neutrophage comme cela a été vu plus haut. La teneur des tubes en matière neutrophage est naturellement adaptée au type d'assemblages combustibles rangés; en particulier on peut tenir compte de ce que ces derniers peuvent comporter des barres ou crayons de poison neutronique répartis entre les crayons combustibles à l'intérieur de l'assemblage (cas des assemblages PWER, VVER 1000...).

Quand le matériau neutrophage est à base de bore, il peut être introduit dans le matériau métallique sous la forme de divers composés chimiques, par exemple l'aluminure de bore si le matériau métallique est l'aluminium ou ses alliages. Avantageusement le bore peut avoir été préalablement enrichi en B10 qui en est l'isotope efficace comme absorbeur de neutrons sur toute l'étendue de spectre énergétique; ceci permet d'en réduire la teneur dans ledit matériau métallique et d'éviter d'en altérer les propriétés (métallurgiques, mécaniques, physiques...). Les composés à base de bore étant généralement sous forme de dispersoïde dans les métaux (Al par exemple) n'en modifient pratiquement pas les caractéristiques thermiques.

En regard du risque de criticité le panier de l'invention présente l'avantage d'être intrinsèquement sur. En effet, pour des raisons liées à la sûreté des réacteurs, les assemblages combustibles nucléaires, utilisant habituellement un combustible U0₂ d'enrichissement inférieur à 5% en U₂₃₅ ou éventuellement un combustible mixte U0₂-Pu0₂ sont conçus en règle générale de manière à constituer une configuration de matière fissile en réseau sous-modéré : de la sorte, dès lors que le métal des tubes possède un allongement suffisant, tout impact accidentel susceptible de déformer le panier selon l'invention ne pourra avoir pour effet que de réduire les distances transversales entre crayons combustibles, donc d'accroître encore la sous-modération et par conséquent d'éloigner tout risque de criticité. On notera à l'inverse que les paniers ou racks, où la sous-criticité repose sur le maintien d'écartements ou d'évidements entre les parois des alvéoles, conduiraient à des excursions critiques dans le cas d'accidents hors standards entraînant la déformation du panier.

Les cerclages destinés à maintenir les tubes juxtaposés sont régulièrement répartis sur la longueur du faisceau de tube. Le cerclage est généralement effectué à l'aide de bandes métalliques ceinturant la périphérie du faisceau, dont les extrémités permettent l'application de la force de serrage spécifiée à l'aide de tous dispositifs connus.

Les bandes sont en général d'un métal différent de celui des tubes, ce métal ayant un coefficient de dilatation dont la différence par rapport à celui des tubes est telle que lors de l'échauffement du panier la cohésion et la rigidité du fagot de tubes juxtaposés ainsi que le bon contact thermique entre les tubes demeurent ou sont améliorés.

En pratique on aura soin de choisir le métal des cerclages et d'en fixer la tension au montage de manière que l'effet de la dilatation différentielle pour le chargement thermique maximum prévu n'entraîne pas de contraintes excessives dans les différents composants du panier.

Le panier peut reposer, par sa face inférieure, sur une plaque rigide, typiquement métallique, équipée de dispositifs adéquats servant à la manutention du panier.

Le domaine d'application des paniers selon l'invention est très étendu. Non seulement ils peuvent être adaptés à différents types d'assemblages combustibles, compactés ou non comme cela a déjà été vu, mais ils peuvent aussi être utilisés au stockage ou au transport des assemblages combustible neufs ou irradiés, en milieu sec ou humide. Ainsi pour certains types de réacteurs, des paniers selon l'invention peuvent servir au transport des dits assemblages depuis le réacteur vers les piscines de refroidissement associées, desquelles ils peuvent être extraits pour être mis dans les emballages blindés de transport conformes à la réglementation applicable. Des paniers selon l'invention peuvent également être utilisés pour un enfouissement définitif, pour lequel ils apportent une garantie de sous-criticité d'une durée égale à leur propre durée de vie.

Il convient de noter que dans la mesure où tout assemblage combustible nucléaire hors réacteur serait maintenu en toute circonstance au cours de sa vie, depuis l'entreposage en fin de fabrication jusqu'en piscine de refroidissement avant retraitement ou jusqu'au stockage intérimaire, voire jusqu'à l'enfouissement, dans des paniers selon l'invention, le risque de criticité résultant d'une erreur humaine serait écarté totalement.

A titre d'illustration de l'invention les figures 1 à 4 montrent différentes possibilités de paniers selon l'invention.

Elles ne diffèrent que par la section droite des tubes juxtaposés (1) : la fig. 1 correspond à des tubes de section triangulaire équilatérale, la fig. 2 à des tubes de section carrée, la fig. 3 à des tubes de section hexagonale, la fig. 4 à des tubes de section circulaire.

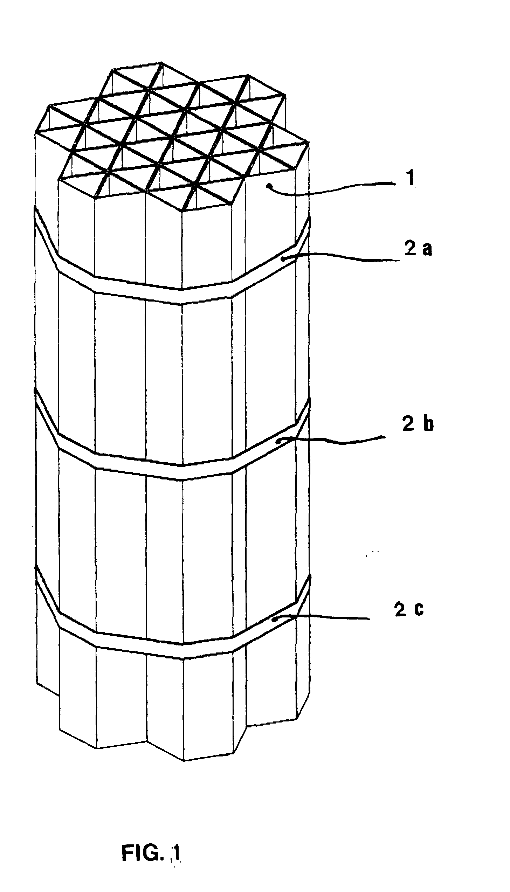

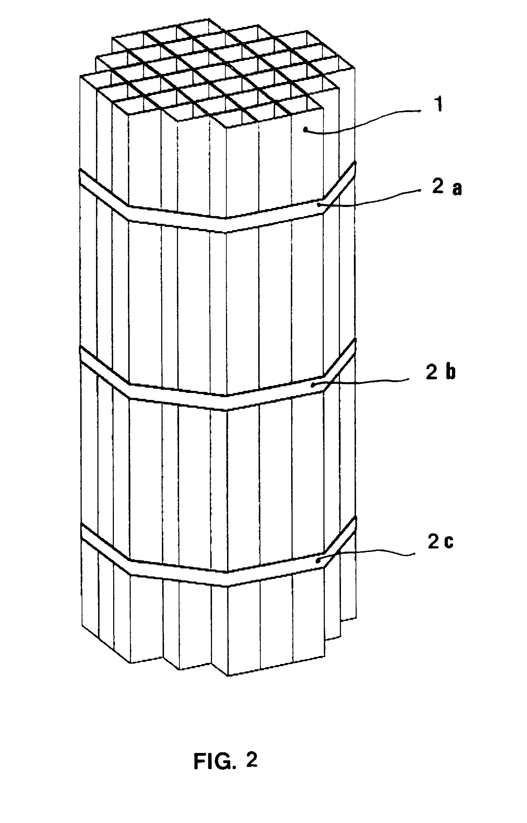

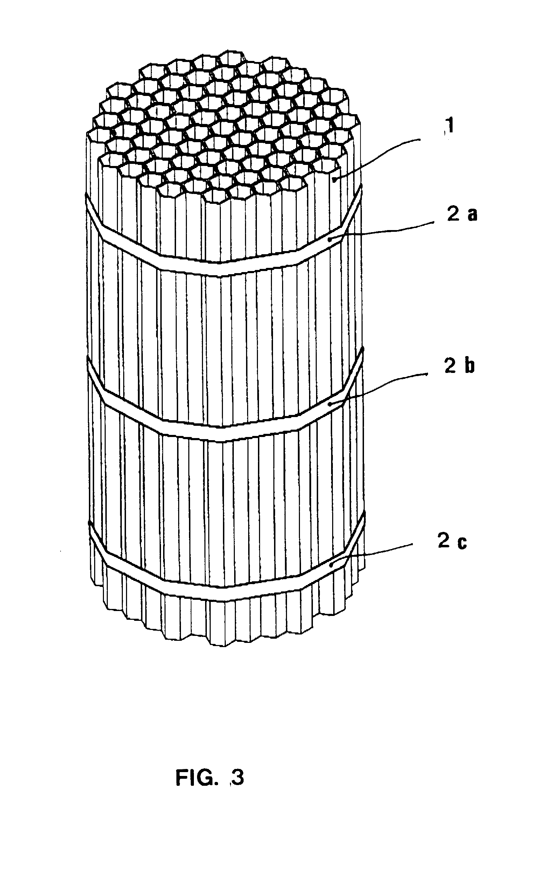

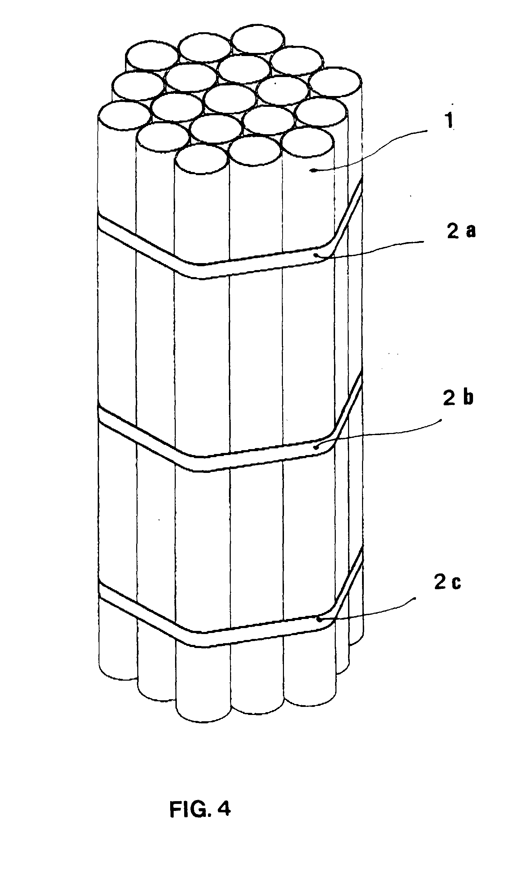

Le faisceau de tube de chacune des figures 1 à 4 est maintenu par trois cerclages (2a, 2b, 2c) dont le système de tension n'est pas représenté.

## Revendications

1. Panier de rangement d'assemblages combustibles nucléaires, constitué d'une pluralité d'alvéoles adjacents de grande longueur parallèles entre eux et destinés à recevoir lesdits assemblages, les parois desdits alvéoles étant en un matériau contenant un élément neutrophage, ce panier comprenant essentiellement une pluralité de tubes identiques de grande longueur constituant les alvéoles, parallèles entre eux, juxtaposés, caractérisé en ce que lesdits tubes sont rectilignes et en contact les uns contre les autres sur leur grande longueur pour former un faisceau compact qui est maintenu dans cette configuration par serrage à l'aide d'un ou plusieurs cerclages distribués sur la longueur dudit faisceau, ce panier étant utilisable à sec.

2. Panier selon la revendication 1 caractérisé en ce que les tubes ont une section polygonale régulière ou circulaire.

3. Panier selon la revendication 2 caractérisé en ce que la section polygonale est triangulaire équilatérale, carrée, rectangulaire ou hexagonale.

4. Panier selon l'une quelconque des revendications 1 à 3 caractérisé en ce que le matériau des tubes est choisi parmi des matériaux résistants mécaniquement et/ou bons conducteurs de la chaleur, de préférence l'acier (ordinaire, inox ou spécial), le Cuivre, le Magnésium, le Titane, l'Aluminium ou leurs alliages.

5. Panier selon l'une quelconque des revendications 1 à 4 caractérisé en ce que l'élément neutrophage est à base de bore.

6. Panier selon la revendication 5 caractérisé en ce que le bore est enrichi en B10.

7. Panier selon l'une quelconque des revendications 1 à 6 caractérisé en ce que le matériau des tubes est de l'aluminium au bore ou de l'acier inox au bore.

8. Panier selon l'une quelconque des revendications 1 à 7 caractérisé en ce que les assemblages combustibles rangés dans ledit panier contiennent des barres ou crayons en matériau neutrophage insérés dans des tubes guides répartis entre les crayons combustibles.

9. Panier selon l'une quelconque des revendications 1 à 8 caractérisé en ce que le cerclage est en métal ayant un coefficient de dilatation différent de celui du matériau des tubes de façon que lors de l'échauffement du panier la cohésion et la rigidité du faisceau de tubes ainsi que le contact thermique entre les tubes soient maintenus ou améliorés.

10. Panier selon l'une quelconque des revendications 1 à 9 caractérisé en ce qu'il repose par sa face inférieure sur une plaque rigide, munie de tirants, destinée à sa manutention.

11. Panier selon l'une quelconque des revendications 1 à 10, caractérisé en ce qu'il est utilisé en milieu sec ou en milieu humide pour le stockage ou le transport des assemblages combustibles neufs ou irradiés.

## Patentansprüche

1. Speicherrahmen für Kernbrennstabbündel, bestehend aus einer Vielzahl benachbarter Hülsen großer Länge, die parallel zueinander angeordet und zur Aufnahme der Bündel bestimmt sind und deren Wände aus einem Werkstoff bestehen, der ein neutronenzerstörendes Element enthält, wobei dieser Rahmen im wesentlichen eine Vielzahl identischer Rohre großer Länge umfaßt, die die Hülsen bilden und parallel nebeneinander angeordnet sind, dadurch gekennzeichnet, daß die Rohre geradlinig sind und sich auf ihrer großen Länge gegenseitig berühren, um ein kompaktes Bündel zu bilden, das durch Festspannen mittels einer oder mehrerer auf der Länge des Bündels verteilter Umreifungen in dieser Anordnung gehalten wird, wobei dieser Rahmen in trockener Umgebung verwendbar ist.

2. Rahmen nach Anspruch 1, dadurch gekennzeichnet, daß die Rohre einen gleichmäßigen vieleckigen oder kreisförmigen Querschnitt haben.

3. Rahmen nach Anspruch 2, dadurch gekennzeichnet, daß der vieleckige Querschnitt in Form eines gleichseitigen Dreiecks, eines Vierecks, Rechtecks oder Sechsecks ausgebildet ist.

4. Rahmen nach einem der Ansprüche 1 bis 3, dadurch gekennzeichnet, daß der Werkstoff der Rohre aus mechanisch festen und/oder gut wärmeleitenden Werkstoffen gewählt ist, vorzugsweise Stahl (Normalstahl, nichtrostender Stahl, Edelstahl), Kupfer, Magnesium, Titan, Aluminium oder deren Legierungen.

5. Rahmen nach einem der Ansprüche 1 bis 4, dadurch gekennzeichnet, daß das neutronenzerstörende Element borbasisch ist.

6. Rahmen nach Anspruch 5, dadurch gekennzeichnet, daß das Bor mit B10 angereichert ist.

7. Rahmen nach einem der Ansprüche 1 bis 6, dadurch gekennzeichnet, daß der Werkstoff der Rohre borenthaltendes Aluminium oder borenthaltender nichtrostender Stahl ist.

8. Rahmen nach einem der Ansprüche 1 bis 7, dadurch gekennzeichnet, daß die in dem Rahmen gespeicherten Brennstabbündel neutronenzerstörende Stangen oder Stäbe enthalten, die in Führungsrohren, welche zwischen den Brennstäben verteilt sind, eingebracht sind.

9. Rahmen nach einem der Ansprüche 1 bis 8, dadurch gekennzeichnet, daß die Umreifung aus einem Metall besteht, dessen Ausdehnungskoeffizient von dem des Rohrwerkstoffs abweicht, so daß bei Erwärmung des Rahmens der Zusammenhalt und die Steifigkeit des Rohrbündels sowie der Wärmekontakt zwischen den Rohren erhalten bleibt oder verbessert wird.

10. Rahmen nach einem der Ansprüche 1 bis 9, dadurch gekennzeichnet, daß er mit seiner Unterseite auf einer starren Platte aufliegt, welche mit Zugstäben zu seiner Handhabung versehen ist.

11. Rahmen nach einem der Ansprüche 1 bis 10, dadurch gekennzeichnet, daß er in trockener oder feuchter Umgebung zur Lagerung oder zum Transport neuer oder bestrahlter Brennstabbündel verwendet wird.

## Claims

1. A rack for nuclear fuel assemblies constituted by a plurality of very long cells which are adjacent and parallel to each other to receive said assemblies, the walls of said cells being formed from a material containing a neutrophage element, said rack essentially comprising a plurality of very long, identical tubes which constitute the cells and which are parallel to each other and juxtaposed, characterized in that said tubes are rectilinear and in contact with each other along their long length to form a compact bundle which is held in this configuration by clamping using one or more tightening straps distributed along the length of said bundle, the rack being suitable for dry use.

2. A rack according to claim 1, characterised in that the tubes have a regular polygonal or circular cross section.

3. A rack according to claim 2, characterised in that the polygonal cross section is an equilateral triangle, square, rectangle or hexagon.

4. A rack according to any one of claims 1 to 3, characterised in that the tube material is selected from mechanically strong materials and/or good heat conductors, preferably steel (ordinary, stainless or special), copper, magnesium, titanium, aluminium or their alloys.

5. A rack according to any one of claims 1 to 4, characterised in that the neutrophage element is boron based.

6. A rack according to claim 5, characterised in that the boron is enriched in B10.

7. A rack according to any one of claims 1 to 6, characterised in that the material of the tubes is aluminium containing boron or stainless steel containing boron.

8. A rack according to any one of claims 1 to 7, characterised in that the fuel assemblies arranged in said rack contain bars or rods of neutrophage material inserted in guide tubes distributed among the fuel rods.

9. A rack according to any one of claims 1 to 8, characterised in that the tightening strap is of metal with an expansion coefficient which is different to that of the tube material so that, during heating of the rack, the cohesion and rigidity of the tube bundle and the thermal contact between the tubes is maintained or improved.

10. A rack according to any one of claims 1 to 9, characterised in that its lower face rests on a rigid plate provided with braces for manipulation thereof.

11. A rack according to any one of claims 1 to 10, characterised in that it is used in a dry medium or a wet medium for storage or transport of new or irradiated fuel assemblies.
